# EUROPEAN PATENT APPLICATION

(11) **EP 4 657 308 A1**
(43) Date of publication of application: **03.12.2025**
(21) Application number: 25176727.3
(22) Date of filing: 15.05.2025
(51) Int. Cl.: G06F 40/30

(54) **CONTEXT AWARE DOCUMENT AUGMENTATION AND SYNTHESIS**

(30) Priority: 29.05.2024 US 202418677859
(71) Applicant: Intuit Inc., Mountain View, CA 94043 (US)
(72) Inventor: MUTHU, Malathy, Mountain View, 94043 (US); KOMMINENI, Ravi Teja, Mountain View, 94043 (US); HUANG, Jingyu, Mountain View, 94043 (US); JHAVERI, Samvid, Mountain View, 94043 (US); KAHLA, Katherine LaVonne, Mountain View, 94043 (US)
(74) Representative: D Young & Co LLP

(57) **Abstract**

A method includes obtaining a document structure from a data repository. The document structure includes multiple structured sections. A table is detected in a first structured section. A table representation of the table is processed by a general large language model (LLM) to generate a natural language description of the table. An image is detected in the first structured section. The image is processed by an image-processing LLM to generate a natural language description of the image. A form is detected in the first structured section. The form is processed by the general LLM to generate a natural language description of the form. The natural language descriptions of the table, image and form are inserted into the first structured section to obtain a modified first structured section. A modified document structure including the modified first structured section is outputted.

## Description

### BACKGROUND

Enterprise applications use documents. One aspect of the use of documents is processing documents. A goal of document processing is converting print, hand-written, software application-based, or web-based documents into a machine-readable format that is digitally intelligible. Digitally intelligible documents may be accessible and searchable by diverse computer systems. Moreover, digitally intelligible documents generated from archives may preserve information for future reference.

### SUMMARY

Particular aspects are set out in the appended independent claims. Various optional embodiments are set out in the dependent claims.

In general, in one aspect, one or more embodiments relate to a method. The method includes obtaining a document structure from a data repository. The document structure includes multiple structured sections. A table is detected in a first structured section. A table representation of the table is processed by a general large language model (LLM) to generate a natural language description of the table. The natural language table description is inserted into the first structured section to obtain a modified first structured section. An image is detected in the first structured section. The image is processed by an image-processing LLM to generate a natural language description of the image. The natural language description of the image is inserted into the first structured section to obtain a modified first structured section. A modified document structure including the modified first structured section is outputted.

In general, in one aspect, one or more embodiments relate to a system. The system includes at least one computer processor, and a document processing engine, executing on the at least one computer processor. The document processing engine includes a map builder and an augmented document generator. The system further includes a general large language model (general LLM), and an image-processing large language model (image LLM) executing on the at least one computer processor and a data repository stored on a persistent physical storage device. The document processing engine is configured to obtain a document structure including multiple structured sections from the data repository and process the plurality of structured sections to generate a modified document structure. The processing includes detecting that a first structured section includes a table, generating by the general LLM, a table representation of the table to generate a natural language table description of the table, and inserting the natural language table description into the first structured section to obtain a first modified structured section. The processing may further include detecting that the first structured section includes an image, generating, by the image LLM, a natural language image description of the image, and inserting the natural language image description into the first structured section to obtain the first modified structured section. The document processing engine outputs the modified document structure comprising the first modified structured section.

In general, in one aspect, one or more embodiments relate to a method. The method includes receiving a request for a training dataset corresponding to a raw document. The method further includes obtaining a document structure corresponding to the raw document from a data repository. The document structure includes multiple structured sections. The method further includes processing the structured sections to generate a modified document structure. The processing includes detecting that a structured section includes a table, processing a table representation of the table by a general LLM to generate a natural language table description of the table and inserting the natural language table description into the structured section to obtain a modified structured section. The method further includes detecting an image in the structured section and processing the image with an image LLM to generate a natural language image description from the image and inserting the natural language image description into the structured section to obtain the modified structured section. The method further includes detecting that the structured section includes a form, processing the form by the general LLM to generate a natural language form description, and inserting the natural language form description into the structured section to obtain the modified structured section. The method further includes outputting the modified document structure including the modified structured section.

Other aspects of one or more embodiments will be apparent from the following description and the appended claims.

### BRIEF DESCRIPTION OF DRAWINGS

FIG. 1 shows a computing system in accordance with one or more embodiments.
FIG. 2 and FIG. 3 show flowcharts in accordance with one or more embodiments.
FIG. 4 shows an example of a table in a document, and a corresponding description augmenting the table generated by a general large language model (LLM) in accordance with one or more embodiments.
FIGS. 5A and 5B show a computing system in accordance with one or more embodiments.

Like elements in the various figures are denoted by like reference numerals for consistency.

### DETAILED DESCRIPTION

In general, embodiments are directed to augmenting documents with natural language descriptions of document artifacts. The augmented natural language descriptions of document artifacts add to the context of the document. Documents may include heterogeneous artifacts, such as text in paragraphs, forms with diverse fields and values, tables, images, graphs, charts, diagrams, *etc.* Thus various embodiments may create digitally intelligible documents by extracting and incorporating the contextual relations and interdependencies of the heterogeneous artifacts of a document when converting the document. The context of a document is informed by the document content, flow of information, and layout information.

Diverse computer applications have capabilities to extract artifacts from printed/handwritten documents, or printable documents of a structured document format type (*e.g*., portable document format (PDF)), and output a digitally intelligible format of the document, that is processable by other computer applications, such as word processors or spreadsheets. For example, optical character recognition (OCR) applications convert images of pages of printed, or handwritten documents to machine-readable representations of the documents, rendering the documents digitally intelligible. Other applications include functionality to extract metadata from application-generated documents. Metadata refers to structured, non-visual information embedded within a document, providing additional context, and describing various characteristics of the document. From a document processing viewpoint, document metadata provides increased digital intelligibility of a document.

Large language models (LLMs) are trained on vast amounts of data. Developing training datasets or training documents from printed documents or application generated documents is required for training LLMs. In the context of creating training documents for training LLMs, OCR applications do not represent the context of the document. For instance, OCR applications treat text as a sequence of characters without understanding its semantic meaning. Further, in OCR-extractions of documents, embedded text in images and tables may be placed in a manner that does not reflect the relationship of the text to the artifact as it existed in the original document. Additionally, metadata associated with complex artifacts may not be capturable by OCR applications. Structured document format (SDF) processing applications may capture the logical sections of the document, and the flow of content between logical sections, but lack advanced text extraction capabilities.

The present disclosure includes a system that processes complex documents including diverse artifacts to generate augmented documents. The augmentation to the original document includes contextually aware, natural language interpretations of complex artifacts, providing enhanced digital intelligibility. The system implements a process that uses OCR extraction to identify artifacts and layout information as an initial step. Subsequently, the document metadata is extracted via an SDF application or application framework, identifying logical sections. A mapping is created between the OCR extraction and the document metadata to group the artifacts into structured sections.

The structured sections are examined to detect the artifact included in the structured section. For example, the system may detect that a structured section includes a table, or a form, or a diagram and/or image. The structured sections are further processed by one or more distinct LLMs. The type of LLM processing the artifact is responsive to the type of artifact detected. In a first case, the detected artifact may be a table. Consequently, the table is processed by a large language model to generate a natural language description of the table in the context of the extracted text. Likewise, if the detected artifact is a diagram or image, then an image-processing large language model processes the diagram/image to generate a natural language description of the diagram/image. The structured sections are augmented with the natural language descriptions. The augmented document is subsequently published.

The resulting augmented document is a copy of the original document with natural language descriptions of the artifacts of the document added to the artifact location and layout within the document. In other words, the augmented document includes enhanced context in addition to the original context, facilitating better understanding and processing, particularly for artificial intelligence driven applications.

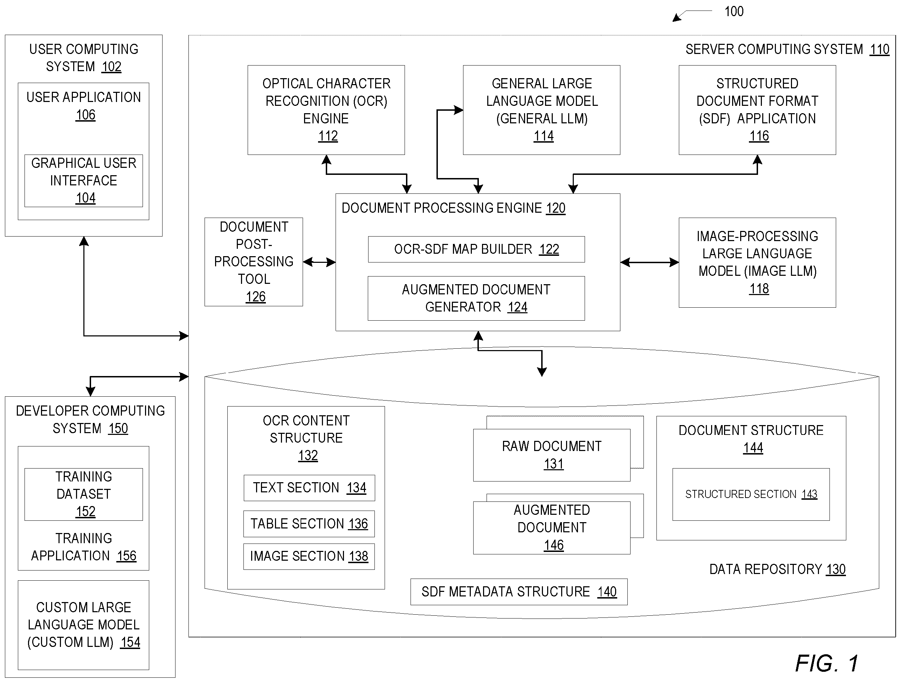

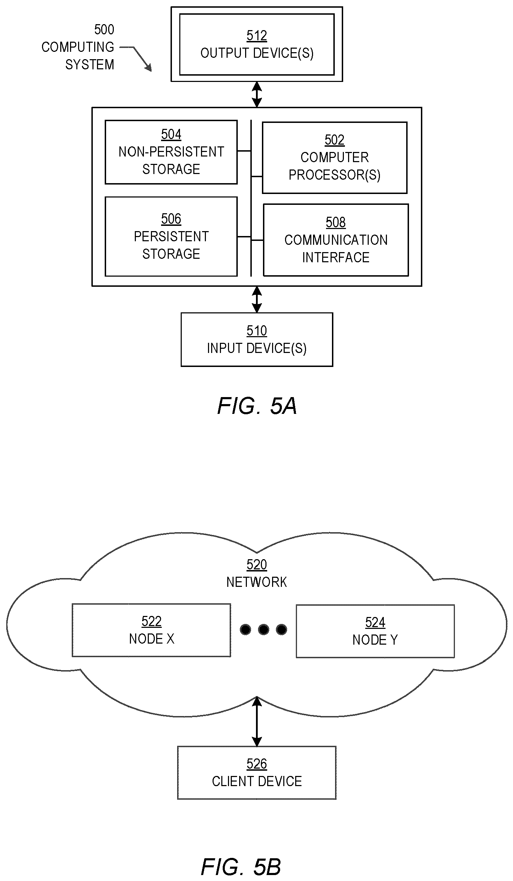

Attention is now turned to the figures. FIG. 1 shows a computing system (100) in accordance with one or more embodiments. The system (100) includes a server computing system (110). The server computing system (110) is communicatively coupled to a user computing system (102) and a developer computing system (150). The server computing system (110) is one or more computer processors, data repositories, communication devices, and supporting hardware and software. The server computing system (110) may be in a distributed computing environment. The one or more processors of the server computing system (110) may execute computer readable program code that defines one or more applications, including a document processing engine (120). Moreover, the server computing system (110) is configured to execute additional applications including an OCR engine (112), a general large language model (general LLM) (114), a structured document format (SDF) application (116), an image-processing large language model (image LLM) (118), and a document post-processing tool (126). An example of a computer system and network that may form the server computing system (110) is described with respect to FIG. 5A and FIG. 5B.

The server computing system includes a data repository (130). The data repository (130) is a type of storage unit or device (*e.g.,* a file system, database, data structure, or any other storage mechanism) for storing data. The data repository (130) may include multiple different, potentially heterogeneous, storage units and/or devices. An example of the data repository (130) is described with respect to persistent storage (506) and non-persistent storage (504) in FIG. 5A.

The data repository may include multiple raw documents (131). The raw documents (131) may be scanned images of printed, or handwritten pages of a document. The raw documents (131) may further include digital documents in a structured document format. Structured document formats refer to a digital format that is recognizable and processable across diverse computing environments. Examples of structured document formats include Portable Document Format (PDF or pdf), XML (eXtensible Markup Language), Paper Specification (XPS), Rich Text Files (RTF), *etc.*

The raw documents (131) may include multiple artifacts. As a general overview, artifacts are document components arranged in a specific layout. Document components are semantically recognizable parts of a document that convey specific information and meaning. For example, natural language sentences are document components. Similarly, graphs, tables, forms, or images in the document are document components, or artifacts. Notably, document components, or artifacts, are visible and recognizable as distinct components when a document is displayed to the user . In the context of printed or digital documents, a layout encompasses how text, images, tables, and other components are organized on a page. More particularly, a layout determines the visual structure, positioning, and flow of content.

Thus, an artifact refers to one or more document components conveying specific information and meaning, presented in a specific layout. For example, paragraphs of natural language sentences in a single or multiple column layout are considered artifacts. Tables presenting data in rows and columns are document components in a structured grid or lattice layout. Thus, tables can be considered as artifacts. Likewise, diagrams (charts, flowcharts, graphs) and other schematic representations of data are artifacts. Notably, artifacts may include combinations of document components in a composite layout. For example, an application form may include natural language sentences prompting a user to enter information and a space for the user to enter said information. The sentence prompts and spaces may be in a predefined layout. The application form is an artifact. In another example, a survey containing a pattern of questions and spaces for a natural language sentence answer or choices for pre-defined answers in a specific layout (*e.g.,* a series of check boxes or radio buttons prefixing each predefined answer) is an artifact.

Further, the raw documents (131) may be logically organized in sections. The sections of a document may be related to one or more artifacts with a specific layout. A logical section of a document refers to a meaningful part or element within the document's structure. A logical section does not necessarily correspond to the position of the document artifacts on each page. Instead, a logical section is a vehicle for organizing information to flow logically across a sequence of such sections. In other words, logical section groups, related content, or information in the document together. Thus, a logical section may encompass one or more artifacts. For example, a logical section may have a heading "Experimental Data," followed by one or more tables, and one or more graphs. The tables and graphs may have captions, and the graphs may have embedded text. The logical section may further include one or more paragraphs of text describing the graphs and/or tables. In the example, the logical section contains three types of artifacts, namely, text, tables, and graphs. Furthermore, logical sections may be organized in hierarchies. For example, the section "Experimental Data" may be a subsection of a logical section identified by a heading "Experiment 1 - Method and variables".

Sections of raw documents (131) may be visually recognizable by section headings or titles, or different layouts (*e.g.,* page headers, footers, footnotes, *etc.*). In the context of digital documents, sections may be identifiable by metadata stored in the document. Metadata refers to structured, non-visual information embedded within a document, providing additional context, and describing various characteristics of the document. From a processing viewpoint, document metadata provides increased digital intelligibility of a document.

In one or more embodiments, raw documents (131) may be received from one or more user applications executing on a user computing system (102) and generating the raw documents (131). In other embodiments, raw documents (131) may be downloaded from diverse document corpora within an enterprise.

Referring again to the data repository (130), it includes data structures related to document processing of the raw documents (131) into augmented documents. One such data structure is the OCR content structure (132). The OCR content structure (132) is generated by the OCR engine (112) processing the raw documents (131). An OCR content structure (132) corresponds to a raw document (131). The OCR content structure (132) includes one or more of each of text sections (134), table sections (136), and image sections (138). Each of these sections are data structures including information pertaining respectively to the text block artifacts, table artifacts, and image artifacts present in the document. In other words, each of these sections are artifact representations of the artifacts in the raw document (131). In one or more embodiments, each of these sections includes at least one artifact identifier, the content extracted by the OCR engine (112) from the artifact (*e.g*., text, key-value pairs, table cell values), and layout information of the artifact, pertaining to the relative position of the artifact within the document. The relative position of the artifact is represented by a bounding box. Bounding boxes are created by the OCR engine (112) processing the document around each recognized character or word. Bounding boxes are rectangular regions that enclose the characters or word. A bounding box may be defined by X-Y coordinates relative to the image, and a width and height value. In one embodiment, a bounding box may be associated with four attributes:
(i) Left (X): The distance from the left edge of the image to the left side of the bounding box.
(ii) Top (Y): The distance from the top edge of the image to the top side of the bounding box.
(iii) Width (W): The width of the bounding box.
(iv) Height (H): The height of the bounding box.

Multiple bounding boxes may be combined to identify larger text blocks such as paragraphs or sections. Thus, a text section (134) may include extracted text encompassing multiple paragraphs of text, or merely one sentence, word or character, and the bounding box information of the text.

In certain cases, the raw document (131) may include an artifact that is a form. A form is a structured physical section of a document. Examples of forms include job application forms, loan application forms, voter registration forms, *etc.* The structure of the form presents one or more areas, or fields, within the document for a user to enter information. The form includes instructions and questions pertaining to the information to be entered. In certain cases, the form may include instructions to choose from a set of pre-defined answers. For example, the form may include an instruction to select an income category, presented as multiple check-boxes corresponding to multiple income categories.

Form data may be extracted from a raw document (131) using OCR methods, in key-value pairs (KVPs). KVPs extracted by OCR refer to linked data items consisting of a key and a corresponding value. The key is a unique identifier representing a specific category, attribute, or label, for example "Name," "Age," or "Product Name," "Quantity," "Price," *etc.* The value corresponds to the actual data associated with the key. Values can be numeric, textual, or other types of data. Values may be predefined category values. For example, "45-50" may be an age category. In one or more embodiments, form data extracted from the raw document (131) is stored in the text section (134) of the OCR content structure.

The image sections (138) are data structures characterizing images and diagrams in the document. That is, the image sections are artifact representations corresponding to image and diagram artifacts in the raw document (131). In one or more embodiments, the image sections may include a link or pointer to a raw image file format of the image or diagram stored separately in the data repository. The image sections further include bounding box information of the image or diagram within the document, and extracted text embedded in the raw image. Examples of raw image file formats include Joint Photographic Experts Group (jpeg), Portable Network Graphics (png), Tagged Image File Format (tiff), *etc.*

Likewise, the table sections (136) are data structures characterizing the tables in the document. That is, the table sections are artifact representations corresponding to the table artifacts in the raw document (131). In one or more embodiments, the table sections (136) may include a link or pointer to a table representation format, for example, a csv file. The table sections further include bounding box information of the table and extracted text pertaining to the table, for example, table captions, or instructions on how to understand the table.

The data repository (130) further includes multiple structured document format (SDF) metadata structures (140). An SDF metadata structure (140) corresponds to a raw document (131). The SDF metadata structure (140) includes section metadata corresponding to the logical sections in the raw document (131). The section metadata corresponding to a logical section includes at least a logical section identifier of the corresponding logical section. Notably, the section metadata may further include other information related to the logical section, for example, if the logical section is part of a logical section hierarchy, and its relative position in the hierarchy. The SDF metadata structure (140) may also include metadata at the document-level, for example, author, title, creation date, *etc.*

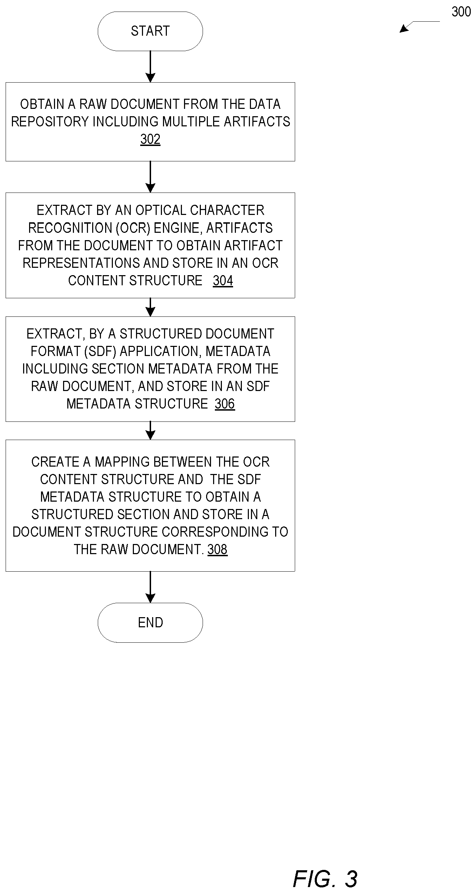

The data repository further includes a document structure (144). The document structure (144) further includes multiple structured sections (143). The document structure (144) is generated by the document processing engine (120). More particularly, an OCR-SDF map builder (122) included in the document processing engine (120) processes an OCR content structure (132) and an SDF metadata structure (140) corresponding to a raw document (131) to generate one or more structured sections (143). The structured sections (143) grouped together constitute a document structure (144) that corresponds to the raw document (131). The structured sections (143) are generated by the OCR-SDF map builder (122) by a mapping process. The mapping process is described in further detail in reference to FIG. 3.

The data repository (130) further includes one or more augmented documents (146), shown in a singular representation. The augmented documents (146) are generated by the document processing engine (120). More particularly, an augmented document generator (124) included in the document processing engine (120) processes the document structure (144) corresponding to a raw document (131) to generate an augmented document (146). An augmented document (146) is a modified enhanced copy of the raw document (131). The augmented document includes additional natural language descriptions of the artifacts of the document. The natural language descriptions are grouped in the same logical section of the original document encompassing the artifacts. For example, consider the scenario that the original document has a section heading "Experimental Data" with one or more tables and one or more graphs. In the example, the augmented document may then include a section heading "Experimental Data," showing the one or more tables, and additionally including a natural language description of the one or more tables. Likewise, the same one or more graphs may be shown, additionally including a natural language description of the graphs. Thus, the logical section of the augmented document (146) includes additional context-aware machine-generated natural language descriptions characterizing the artifacts of the original document corresponding to the original logical section.

The server computing system (110) includes an OCR engine (112). The OCR engine (112) is operably and communicably coupled to the document processing engine (120). The OCR engine (112) is configured to convert scanned images of printed or handwritten documents, or printable documents in a structured document format into a machine-readable format. In one or more embodiments, the OCR engine (112) is triggered by the document processing engine (120) to process a raw document (131). In response, the OCR engine (112) processes the raw document (131) and generates an OCR content structure corresponding to the raw document (131). Examples of OCR engines (112) include Amazon Textract^{®}, Adobe Document Cloud^{®} services, Google Cloud Document AI^{™}, *etc.*

The server computing system (110) further includes a SDF application (116). The SDF application (116) is operably and communicably coupled to the document processing engine (120). The SDF application (116) is configured to extract metadata from raw documents (131). In one or more embodiments, the SDF application (116) is triggered by the document processing engine (120) to process a raw document (131). In response, the SDF application (116) processes the raw document (131) and generates an SDF metadata structure corresponding to the raw document (131). In one or more embodiments, the SDF application (116) includes application libraries for processing PDF, XPS, or RTF and other structured document formats. Examples of application libraries include PYPDF, pdfplumber, pdfminer, XMP (eXtensible Markup Data), toolkit, PyMuPDF, *etc.*

The server computing system (110) also includes a general LLM (114). The general LLM (114) is a natural language processing machine learning model. The general LLM (114) is operably and communicably coupled to the document processing engine (120). In one or more embodiments, the general LLM (114) is triggered by the document processing engine (120) to process a table obtained from a structured section of a document structure. The general LLM (114) processes the table to generate a natural language description of the table. Likewise, the general LLM (114) may be triggered by the document processing engine (120) to process a form obtained from a structured section of a document structure. Accordingly, the general LLM (114) may process the form to generate a natural language description of the keys and associated values of the form. An example of the general LLM (114) may be a large language model, such as CHATGPT^{®}. However, many different language models may be used.

The server computing system also includes an image LLM (118). The image LLM (118) may be a large language model combined with an image encoder and decoder model, referred to as a multi-modal large language model. As a general overview, multi-modal LLMs contextualize images with natural language descriptions. The image LLM (118) is operably and communicably coupled to the document processing engine (120). In one or more embodiments, the document processing engine (120) triggers the image LLM (118) to process an image obtained from a structured section of a document structure. The image LLM (118) processes the image to generate a natural language description of the image. One example of a multi-modal LLM is GPT-4V. However, many different multi-modal LLMs may be used.

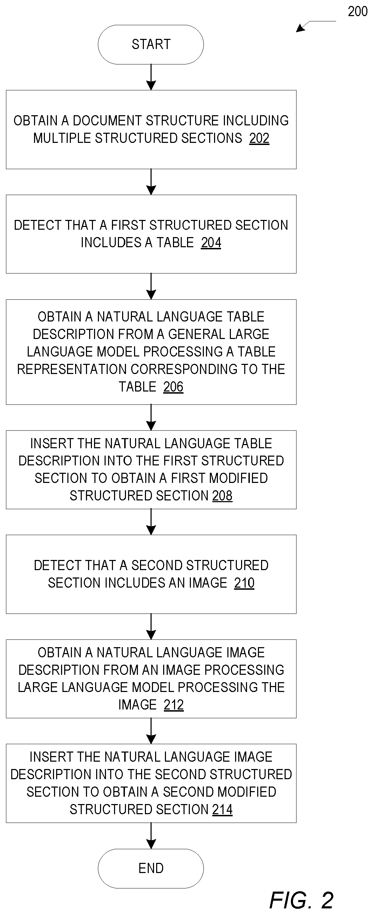

The server computing system (110) also includes a document processing engine (120). The document processing engine (120) is operably and communicably coupled to the other processing components of the server computing system (110) as described herein. Further, the document processing engine (120) is operably and communicably coupled to the data repository (130). The document processing engine (120) is software or application specific hardware which, when executed by the one or more computer processors of the server computing system (110), in essence performs the method of FIG. 2. The document processing engine (120) orchestrates the various applications, engines and tools executing on the server computing system (110) to process the raw documents (131) from the data repository (130) and generate corresponding augmented documents (146).

The document processing engine (120) further includes an OCR-SDF map builder (122) and an augmented document generator (124). The OCR-SDF map builder (122) is programmatically triggered by the document processing engine (120) to perform the specific task of building a mapping between the OCR content structure and the SDF metadata structure corresponding to the raw document (131) to generate one or more structured sections corresponding to the raw document (131). Subsequently, the document processing engine (120) stores the multiple structured sections in a document structure corresponding to the raw document (131).

In a similar fashion, subsequent to processing the structured sections of the document structure to obtain modified document structures, the document processing engine (120) programmatically triggers the augmented document generator (124) to generate an augmented document (146) from the document structure from the modified structured sections of the document structure. Processing of the structured sections by the document processing engine (120) to obtain modified structured sections is described in further detail in reference to FIG. 2.

The server computing system (110) further includes a document post-processing tool (126). The document post-processing tool (126) is operably and communicably coupled to the document processing engine (120). In one or more embodiments, the document post-processing tool (126) includes functionality to tokenize the augmented document (146) to optimize text sequences for LLM training by matching the sequence length to the LLM's maximum token length criteria to obtain a tokenized document. The tokenized document may be further processed by the document post-processing tool (126) to obtain a training dataset corresponding to the augmented document (146). Moreover, the training dataset is tailored to comply with token size requirements of a particular machine-learning or large-language model. Tokenization refers to extracting and converting a sequence of text into individual units, commonly known as tokens. In the context of Natural Language Processing (NLP) and machine learning, these tokens can represent words or characters. Tokenization entails cleaning and standardizing data, *e.g.,* removing unwanted characters and formatting, and presents a representation of text for machine learning models. As a general overview, large language models and other machine-learning models have a context window limited by a maximum sequence length that a model can process at a time. A higher token length value engenders capturing more context, and consequently a better understanding of complex relationships in the dataset. However, token length may be limited by memory requirements, and computational time and resource allocations.

In one or more embodiments, the document post-processing tool (126) may include functionality for other typical tasks of training dataset preparation, for example, data cleaning and noise removal, stop word removal, text annotation and labeling, *etc.* Examples of document post-processing tools (126) include Hugging Face^{™}. However, other document post-processing tools (126) may be used. Software application libraries with tokenization functionality include Natural Language Tool Kit (NLTK), spaCy, scikit-learn, *etc.*

The system (100) of FIG. 1 further shows a user computing system (102). The user computing system (102) includes a user application (106). The user application (106) further includes a graphical user interface (GUI) (104) which presents the user with various GUI (104) artifacts, for example, forms, dialog boxes, tables, *etc.,* to enter information or otherwise interact with the user application (106). The user application (106) is configured to generate raw documents (131) with information obtained from a user.

The system (100) of FIG. 1 further shows a developer computing system (150). The developer computing system (150) includes a training application (156). The training application (156) includes a training dataset (152) used by the training application (156) to train a custom LLM (154). In one or more embodiments, the server computing system (110) may receive a request from the developer computing system (150) for a training dataset (152) to train the custom LLM (154). In response, the server computing system (110) may transmit a training dataset (152) matching the token length requirements of the custom LLM (154) to the developer computing system (150). The training dataset (152) may be generated by the document post-processing tool (126). In one embodiment, the document processing engine (120) may include functionality to trigger the document post-processing tool (126) to process an augmented document (146) to generate the training dataset (152), in response to the request from the developer computing system (150).

While FIG. 1 shows a configuration of components, other configurations may be used without departing from the scope of one or more embodiments. For example, various components may be combined to create a single component. As another example, the functionality performed by a single component may be performed by two or more components.

FIG. 2 shows a flowchart of a method (200) for processing multiple structured sections of a document structure, in accordance with one or more embodiments. The method of FIG. 2 may be implemented using the system of FIG. 1 and one or more of the steps may be performed on or received at one or more computer processors.

While the various steps in the method (200) are presented and described sequentially, at least some of the steps may be executed in different orders, may be combined, or omitted, and at least some of the steps may be executed in parallel. Moreover, the steps of the flowchart may be performed iteratively as a whole, or in part. Furthermore, the steps may be performed actively or passively.

The method (200) starts at Block 202. In Block 202, a document structure is obtained from the data repository. The document structure includes multiple structured sections. In one or more embodiments, a structured section may include logical section metadata. The structured section may further include multiple artifact representations. An artifact representation may include at least one artifact identifier, a link or pointer to the raw artifact representation (*e.g*., a csv file or a raw image file) and bounding box information indicating the relative location of the artifact in the document. Alternatively, or additionally, the structured section may include the actual content of the artifact (*e.g*., extracted text, key-value pairs). In one embodiment, the document processing engine includes functionality to obtain the document structure from the data repository.

In certain cases, the method (200) may be triggered by a request originating from a developer computing system for a training dataset or a training document for training a large language model or machine learning model. In one or more embodiments, the request may include one or more raw documents or raw document identifiers.

In one or more embodiments, the method (200) may be iterated to process the structured sections of the document structure, applying one of the general LLM or the image LLM to the artifact representations corresponding to the structured sections and appending the output of the LLMs to the structured sections. The iterations may result in a modified document structure including a plurality of modified structured sections. That is, the output of the method (200) is a modified document structure including a plurality of modified structured sections. Applying one of the general LLM or the image LLM refers to triggering the LLMs to process the artifact representation to generate a natural language description of the artifact representation.

At Block 204, a first structured section of the document structure is examined. In one or more embodiments, the document processing engine may include functionality to examine, or parse the structured section programmatically. In the parsing or examination of the structured section, a table artifact may be detected. In one or more embodiments, data pertaining to the artifact type may identify an artifact as a table. Notably, a structured section may include more than one artifact of more than one type. If an artifact is identified as a table, in one embodiment, the document processing engine may obtain the pointer or link to a file storing the raw table. In one example, the file may be a csv file.

Subsequently, at Block 206, a natural language table description of the table is obtained from the general LLM processing a table representation corresponding to the table. In one or more embodiments, the document processing engine may send the file storing the raw table along with a prompt to the general LLM. In one example, the prompt may be of the form "Interpret this table in human-readable context line by line." The prompt may be programmatically sent to the general LLM via an application programming interface (API) call, along with the table file. The general LLM may process the table file in accordance with the prompt and generate a natural language description of the table. Subsequently, the general LLM may return the natural language table description to the document processing engine.

At Block 208, the natural language table description is inserted into the first structured section to obtain a first modified structured section. In one or more embodiments, the document processing engine may add the natural language table description obtained from the general LLM into the first structured section and correspondingly update the section metadata corresponding to the first structured section to include the newly inserted natural language table description as an additional artifact.

Blocks 210, 212, and 214 entail performing operations similar to Blocks 204-208. Multiple artifact types may be in the same structured section. For example, the structured section may include a table and an image, whereby processing is performed on the structured section for a table and separate processing is performed for an image. For example, in a tax form, name, age, and income fields may exist. Further, the tax form may have a table showing a selection of tax schedules to file. The schedule is associated with age and income. Section metadata may indicate that the form and table are grouped together in a logical section. Thus, the structured section may include more than one artifact type. At Block 210, the document processing engine detects that a first structured section includes an image artifact. Again, in one or more embodiments, the document processing engine may examine or parse the first structured section and identify an artifact type as an image artifact. Accordingly, the document processing engine may retrieve the raw image file corresponding to the image artifact from the data repository.

At Block 212, a natural language image description of the image is obtained from the image LLM. In one or more embodiments, the document processing engine may send the raw image file along with a prompt to the image LLM. In one example, the prompt may be of the form "Describe this image in natural language sentences." The prompt may be programmatically sent to the image LLM via an application programming interface (API) call, along with the image file. The image LLM may process the image file in accordance with the prompt and generate a natural language description of the image. Subsequently, the image LLM may return the natural language image description to the document processing engine.

At Block 214, the natural language image description is inserted into the first structured section to obtain the first modified structured section. In one or more embodiments, the document processing engine may add the natural language image description obtained from the general LLM into the first structured section and correspondingly update the section metadata corresponding to the first structured section to include the newly inserted natural language image description as an additional artifact.

In one or more embodiments, the method (200) may include further processing steps (not shown): The document processing engine may detect that the first structured section includes a form artifact, in a similar manner to detecting an image artifact or a table artifact. In one embodiment, the first structured section may include key-value pairs representing the form data, and additional informational/instructive text pertaining to the form. Subsequently, the document processing engine may send the key-value pairs, and additional informational/instructive text pertaining to the form to the general LLM. Accordingly, the general LLM may process the form data and the informational/instructive text to generate a natural language form description and return the natural language form description to the document processing engine. In a next step, the document processing engine may insert the natural language form description into the first structured section, in like fashion as the first and second insertions to the first structural section. Thus, the first modified structural section may be obtained.

Subsequent to the multiple structured sections being processed in accordance with the method (200), the document processing engine may trigger the augmented document generator to generate an augmented document from the multiple modified structured sections and alternatively or additionally, the unmodified structured sections. In one or more embodiments, the augmented document generator may assemble the augmented document by retrieving the artifacts of a modified structured section along with the bounding box information corresponding to the artifacts. Further, the augmented document generator may adjust the bounding box boundaries of the original artifacts to accommodate the inserted natural language artifact description and overlay the inserted natural language artifact description into the appropriate space demarcated by the adjusted bounding box boundaries. The augmented document generator may iterate through the artifacts of the multiple modified structured sections, generating the document section by section until the augmented document generation is complete. Finally, the document processing engine may store the augmented document in the data repository.

In the case where the method (200) is triggered by a request for a training dataset to be generated from one or more raw documents, an additional post-processing step may be performed. In one or more embodiments, the post-processing step may be performed by the document post-processing tool, triggered by the document processing engine. In one embodiment, the document processing engine may retrieve an augmented document, if available, corresponding to the raw document from the data repository, and pass it to the document post-processing tool. The document post-processing tool generates a training dataset from the augmented document. The generated training dataset is tailored to comply with token size requirements of a particular machine-learning or large-language model.

Referring now to FIG. 3, a flowchart is depicted of a method (300) for creating a mapping between an OCR content structure and an SDF metadata structure. The method of FIG. 3 may be implemented using the system of FIG. 1 and one or more of the steps may be performed on or received at one or more computer processors.

While the various steps in the method (300) are presented and described sequentially, at least some of the steps may be executed in different orders, may be combined, or omitted, and at least some of the steps may be executed in parallel. Moreover, the steps of the flowchart may be performed iteratively as a whole, or in part. Furthermore, the steps may be performed actively or passively.

The mapping process of document content and layout information obtained from an OCR extraction of a raw document to logical section metadata obtained from an SDF application analyzing the raw document entails the organization of the document content and the layout information, informed by, or in accordance with, the context of the logical section. The document content refers to the content of the artifacts in the document. The layout information includes bounding box information corresponding to the artifacts in the document. Thus, the mapping process entails organizing the artifacts by logical section into a cohesive document structure.

The method (300) starts at Block 302. At Block 302, a raw document is obtained from the data repository. At Block 304, the raw document is processed by the OCR engine to obtain an OCR content structure. The OCR content structure is stored in the data repository. In one embodiment, the document processing engine may trigger the OCR engine to process a raw document. The OCR engine may return the OCR content structure to the document processing engine, and the document processing engine may store the OCR content structure in the data repository.

Processing the raw document by the OCR engine to obtain an OCR content structure may entail multiple steps. In one or more embodiments, if the document is a set of scanned page images, the images may be preprocessed to enhance the image quality. The image may then be segmented into smaller components, and characters may be extracted from the image background. Further, each character may be analyzed within the segments of the image, entailing feature extraction of the characters and pattern recognition. The characters are recognized, and the text content is extracted. Thus, the OCR engine may transform page images into a usable machine-readable format. Additionally, the OCR engine may recognize structured artifacts, such as tables, forms, and diagrams, and extract the relevant information. The relevant information may include bounding box boundaries for the artifacts, cell values, and row and column names of tables, key-value pairs of forms, embedded text of images, *etc.* More particularly, if the artifact is a table, the OCR engine may generate a raw table file corresponding to the table that includes the table values (*e.g*., a csv file) and may store the file in the data repository. Further, the OCR engine may create a table section as described in reference to FIG. 1, that corresponds to the table. Likewise, the OCR engine may create text sections and image sections, respectively corresponding to extracted text and forms, and images. Furthermore, for images, the OCR engine may store the raw image corresponding to the image artifact in an image file format in the data repository. The text sections and image sections are as described in reference to FIG. 1.

In certain cases, the OCR engine may leverage machine learning models to improve accuracy of character recognition and artifact recognition. A similar set of steps may be performed for OCR extraction of raw documents in a structured document format.

At Block 306, the SDF application processes the raw document. In one or more embodiments, the SDF application may extract section metadata corresponding to logical sections in the raw document and document-level metadata from the raw document, to obtain an SDF metadata structure, and further, may store the SDF metadata structure corresponding to the raw document in the document store.

At Block 308, a mapping process between the OCR content structure corresponding the raw document and the SDF metadata structure corresponding to the raw document is performed to create one or more structured sections. The structured sections are added to a document structure corresponding to the raw document, and the document structure is stored in the data repository. The mapping process is to create a document representation based on the analysis of both the OCR-extraction of the raw document, and the SDF metadata structure of the raw document, in particular, the logical sections of the raw document.

In one or more embodiments, the document processing engine may programmatically trigger the OCR-SDF map builder to perform the mapping process between the OCR content structure and the SDF metadata structure.

In one or more embodiments, the mapping process may entail matching a section identifier corresponding to section metadata of a logical section from the SDF metadata structure to an artifact identifier corresponding to an artifact representation of the OCR content structure. The artifact representation may be a text section, a table section, or an image section. Further, the logical section may be associated with the artifact representation, corresponding respectively to the matched section identifier and artifact identifier. The association may be represented in the structured section in various forms. In one embodiment, the association may be represented by a data object including the content corresponding to the artifact representation, for example, a text block, or key-value pairs in the case of text or a form, and the bounding box information corresponding to the artifact representation. If the artifact is a table, the content of the data object may include, for example, caption text of the table, and/or other text pertaining to the table. The data object may additionally include a link to the table representation (*e.g*., a csv file) in the data repository. Likewise, if the artifact is an image, the content of the data object may include, for example, image caption text, text that was embedded in the image, *etc.* The representing data object may additionally include a link to the raw image file in the data repository. The data object representing the association may be added to a structured section. The specific content and layout of the structured section may be informed by, or in accordance with, the content and bounding box information of the artifact representation(s) associated with the logical section.

The logical sections of the raw document are thus associated with the artifacts from the OCR content structure corresponding to the raw document. The said associations constitute the corresponding structured sections. For example, a structured section may be identified by the section title "IV - Experimental Data," corresponding to a logical section identified by the same section title. The structured section may include an association (*i.e.,* a data object) to a table (*e.g.,* "Table IV.1") corresponding to a table section of the OCR content structure. Further, the data object representing the association may include a link to a raw table file corresponding to Table IV.1 in the data repository. In another example, a structured section may be identified by the section title "Taxpayer information form." The structured section may include an association to a form. The association may be represented by a data object that includes key-value pairs corresponding to the form data (*e.g.,* "Taxpayer-information-Name"-"Jane Doe;" "Taxpayer-information-DOB"-"05/11/1989"; *etc.*).

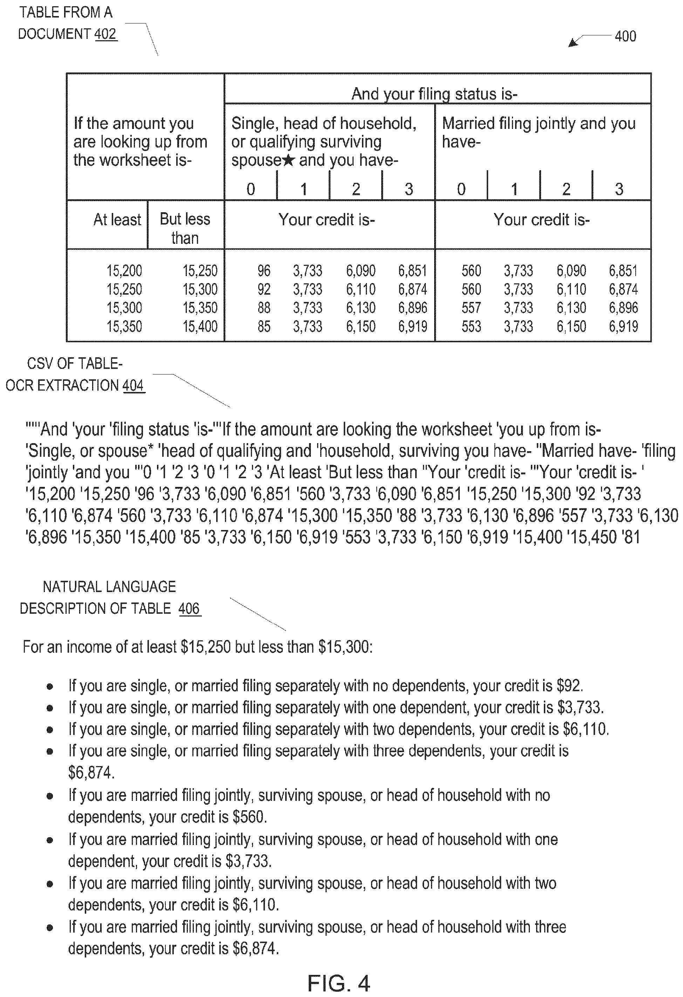

FIG. 4 shows an example of an OCR extraction of a table, and an enhanced natural language description of the table generated by the general LLM, when the table is processed in accordance with the method (200) presented in FIG. 2. The following example is for explanatory purposes only and not intended to limit the scope of one or more embodiments.

Reference numeral (402) is representative of a section of a table in a tax form. The table provides information about the tax credit due to a taxpayer based on the income and filing status of the taxpayer. The layout of the table is complex, with columns divided in a hierarchy of four levels. The table may be found in tax return forms.

Reference numeral (404) is representative of part of an output from the OCR engine when it processes the table indicated by reference numeral (402). Notably, the characters, words and numbers are successfully extracted from the table, with no irregular (unreadable) characters or jumbled words. However, the context of the table that the particular hierarchical layout of the columns brings to the table in its original form is lost. Instead, the column headers are concatenated together line by line, as if the table were read like a page of regular text, followed by comma separated numbers. This layout of content is inconvenient for human reading and/or comprehension, or large language model comprehension. Moreover, the content layout as shown in the table representation indicated by reference numeral (404) may not be convenient to convert into a training dataset for custom large language models.

Reference numeral (406) is representative of part of the output from the general LLM when it processes the table representation indicated by reference numeral (404). The general LLM accurately interprets the text section of the table representation indicated by reference numeral (404) and provides a bullet list that describes the table in natural language sentences encompassing a written description of the table. The bullet list may be appended to the structured section including the table representation indicated by reference numeral (404).

An augmented document generated with the modified structured section that includes the natural language description of the table generated by the general LLM may include the natural language description of the table following the table in its original layout, as indicated by reference numeral (402).

The system disclosed in the present disclosure analyzes and enhances the raw document. The integration of an OCR extraction with LLM-driven natural language description and visual interpretation, reassembled into the augmented document, render the augmented document as a suitable candidate for training applications training custom LLM or machine-learning models.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5A, the computing system (500) may include one or more computer processor(s) (502), non-persistent storage device(s) (504), persistent storage device(s) (506), a communication interface (508) (*e.g.,* Bluetooth interface, infrared interface, network interface, optical interface, *etc.*)*,* and numerous other elements and functionalities that implement the features and elements of the disclosure. The computer processor(s) (502) may be an integrated circuit for processing instructions. The computer processor(s) (502) may be one or more cores or micro-cores of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.,* which may be processed and transmitted by the computing system (500) in accordance with one or more embodiments. The communication interface (508) may include an integrated circuit for connecting the computing system (500) to a network (not shown) (*e.g*., a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device (512). One or more of the output device(s) (512) may be the same or different from the input device(s) (510). The input (510) and output device(s) (512) may be locally or remotely connected to the computer processor(s) (502). Many distinct types of computing systems exist, and the aforementioned input (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer readable program code to perform embodiments may be provided by way of a computer readable medium. A computer readable medium may be implemented as a computer readable storage medium which can store such instructions, in whole or in part, temporarily or permanently. Examples of computer-readable storage medium (which may be referred to as a non-transitory computer readable medium) include a solid state drive (SSD), compact disc (CD), digital video disc (DVD), storage device, a diskette, a tape, flash memory, physical memory, or any other computer readable storage medium. A computer-readable medium may also or alternatively be implemented as a transmission medium by which instructions may be conveyed. A computer-readable transmission medium may include carrier waves, transmission signals or the like. A computer-readable transmission medium may convey instructions between components of a single computer system and/or between plural separate computer systems. Specifically, the software instructions may correspond to computer readable program code that, when executed by the computer processor(s) (502), is configured to perform one or more embodiments, which may include transmitting, receiving, presenting, and displaying data and messages described in the other figures of the disclosure.

The computing system (500) in FIG. 5A may be connected to or be a part of a network. For example, as shown in FIG. 5B, the network (520) may include multiple nodes (*e.g.,* node X (522) and node Y (524)). Each node may correspond to a computing system (500), such as the computing system (500) shown in FIG. 5A, or a group of nodes combined may correspond to the computing system (500) shown in FIG. 5A. By way of an example, embodiments may be implemented on a node of a distributed system that is connected to other nodes. By way of another example, embodiments may be implemented on a distributed computing system (500) having multiple nodes, where each portion may be located on a different node within the distributed computing system. Further, one or more elements of the aforementioned computing system (500) may be located at a remote location and connected to the other elements over a network.

The nodes (*e.g.,* node X (522) and node Y (524)) in the network (520) may be configured to provide services for a client device (526), including receiving requests and transmitting responses to the client device (526). For example, the nodes may be part of a cloud computing system. The client device (526) may be a computing system (500), such as the computing system shown in FIG. 5A. Further, the client device (526) may include or perform all or a portion of one or more embodiments.

The computing system of FIG. 5A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown as well as how data is presented to a user. Furthermore, the GUI may present data directly to the user, *e.g*., data presented as actual data values through text, or rendered by the computing device into a visual representation of the data, such as through visualizing a data model.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include or be included within the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc.*) may be used as an adjective for an element (*i.e.,* any noun in the application). The use of ordinal numbers is not to imply or create any particular ordering of the elements nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

Therefore, from one perspective, there have been described approaches that include obtaining a document structure from a data repository. The document structure includes multiple structured sections. A table is detected in a first structured section. A table representation of the table is processed by a general large language model (LLM) to generate a natural language description of the table. An image is detected in the first structured section. The image is processed by an image-processing LLM to generate a natural language description of the image. A form is detected in the first structured section. The form is processed by the general LLM to generate a natural language description of the form. The natural language descriptions of the table, image and form are inserted into the first structured section to obtain a modified first structured section. A modified document structure including the modified first structured section is outputted.

Further examples of feature combinations taught by the present disclosure are set out in the following numbered clauses.

Clause 1. A method comprising: obtaining, by a document processing engine, a document structure from a data repository, the document structure comprising a plurality of structured sections; and processing, by the document processing engine, the plurality of structured sections to generate a modified document structure, wherein processing the plurality of structured sections comprises: processing, responsive to detecting that a first structured section comprises a first table, and by a general large language model (LLM), a table representation of the first table to generate a natural language table description of the first table, inserting the natural language table description into the first structured section to obtain a first modified structured section, processing, responsive to detecting that the first structured section comprises a first image, and by an image-processing LLM, the first image to generate a natural language image description from the first image, and inserting the natural language image description into the first structured section to obtain the first modified structured section; and outputting the modified document structure comprising the first modified structured section.

Clause 2. The method of clause 1, further comprising: detecting that the first structured section comprises a first form, the first form comprising a plurality of key-value pairs; and processing, responsive to detecting that the first structured section comprises the first form, and by the general LLM, the first form to generate a natural language form description; and inserting the natural language form description into the first structured section to obtain the first modified structured section.

Clause 3. The method of clause 2, wherein the first structured section further comprises natural language sentences corresponding to the first form and wherein the natural language form description further includes the natural language sentences corresponding to the first form.

Clause 4. The method of clause 1, 2 or 3, further comprising: generating, by the document processing engine, an augmented document from a plurality of modified structured sections in the modified document structure; and storing the augmented document in the data repository.

Clause 5. The method of any preceding clause, further comprising: obtaining, by the document processing engine, a raw document from the data repository, the raw document comprising a plurality of artifacts, the plurality of artifacts comprising a text section, a form, a table, and an image; extracting, by an optical character recognition (OCR) engine, the plurality of artifacts from the raw document to obtain a plurality of artifact representations; and storing the plurality of artifact representations in an OCR content structure corresponding to the raw document in the data repository.

Clause 6. The method of any preceding clause, further comprising: obtaining, by the document processing engine, a raw document from the data repository, the raw document comprising a plurality of artifacts, the plurality of artifacts comprising a text section, a form, a table, and an image; and extracting, by an optical character recognition (OCR) engine, the plurality of artifacts from the raw document to obtain a plurality of artifact representations, wherein the artifact representation comprises an artifact identifier, content corresponding to the artifact, and layout information corresponding to the artifact, and wherein the layout information includes a bounding box corresponding to a relative position of the artifact in the raw document.

Clause 7. The method of any preceding clause, further comprising: obtaining, by the document processing engine, a raw document from the data repository; processing, by an SDF application, the raw document to obtain structured document format (SDF) metadata corresponding to the raw document; and storing the SDF metadata in an SDF metadata structure corresponding to the raw document in the data repository.

Clause 8. The method of any preceding clause, further comprising: obtaining, by the document processing engine, a raw document from the data repository, the raw document comprising a plurality of logical sections; and processing, by an SDF application, the raw document to obtain structured document format (SDF) metadata corresponding to the raw document, wherein the SDF metadata comprises document metadata, and a plurality of section metadata corresponding to the respective plurality of logical sections of the raw document, and wherein a section metadata comprises a section identifier.

Clause 9. The method of any preceding clause, further comprising: obtaining an OCR content structure and an SDF metadata structure corresponding to a raw document from the data repository; matching a section identifier corresponding to section metadata of a logical section from the SDF metadata structure to an artifact identifier corresponding to an artifact representation of the OCR content structure; associating, in a structured section, the logical section and the artifact representation corresponding respectively to the matched section identifier and the artifact identifier; adding the structured section to the document structure corresponding to the raw document; and storing the document structure in the data repository.

Clause 10. A system comprising: at least one computer processor; a document processing engine, executing on the at least one computer processor, and comprising an OCR-SDF map builder and an augmented document generator; a general large language model (general LLM), executing on the at least one computer processor; an image-processing large language model (image LLM), executing on the at least one computer processor; and a data repository, stored on a persistent storage device; wherein: the document processing engine is configured to: obtain a document structure from the data repository, the document structure comprising a plurality of structured sections; process the plurality of structured sections to generate a modified document structure, comprising: processing, responsive to detecting that a first structured section comprises a first table, and by the general LLM, a table representation of the first table to generate a natural language table description of the first table, and inserting the natural language table description into the first structured section to obtain a first modified structured section, processing, responsive to detecting that the first structured section comprises a first image, and by the image LLM, the first image to generate a natural language image description from the first image, and inserting the natural language image description into the first structured section to obtain the first modified structured section; and output the modified document structure comprising the first modified structured section.

Clause 11. The system of clause 10, wherein: the document processing engine is further configured to cause the at least one computer processor to: detect that the first structured section comprises a first form, the first form comprising a plurality of key-value pairs; and apply, responsive to detecting that the first structured section comprises the first form, the general LLM to the first form to generate a natural language form description; and insert the natural language form description into the first structured section to obtain the first modified structured section.

Clause 12. The system of clause 11, wherein the first structured section further comprises natural language sentences corresponding to the first form and wherein the natural language form description further includes the natural language sentences corresponding to the first form.

Clause 13. The system of clause 10, 11 or 12, wherein: the document processing engine is further configured to cause the at least one computer processor to: generate an augmented document from a plurality of modified structured sections in the modified document structure; and store the augmented document in the data repository.

Clause 14. The system of any of clauses 10 to 13, further comprising: an optical character recognition (OCR) engine executing on the at least one computer processor; and wherein: the document processing engine is further configured to cause the at least one computer processor to: obtain a raw document from the data repository, the raw document comprising a plurality of artifacts, the plurality of artifacts comprising: a text section comprising a form, a table, and an image; cause the OCR engine executing on the at least one computer processor to extract the plurality of artifacts from the raw document to obtain a plurality of artifact representations; and store the plurality of artifact representations in an OCR content structure corresponding to the raw document in the data repository.

Clause 15. The system of any of clauses 10 to 14, further comprising: an optical character recognition (OCR) engine executing on the at least one computer processor; and wherein: the document processing engine is further configured to cause the at least one computer processor to: obtain a raw document from the data repository, the raw document comprising a plurality of artifacts, the plurality of artifacts comprising a text section comprising a form, a table, and an image; and cause the OCR engine executing on the at least one computer processor to extract the plurality of artifacts from the raw document to obtain a plurality of artifact representations, wherein the artifact representation comprises an artifact identifier, content corresponding to the artifact, and layout information corresponding to the artifact, wherein the layout information includes a bounding box corresponding to a relative position of the artifact in the raw document. ]

Clause 16. The system of any of clauses 10 to 15, further comprising: a structured document format (SDF) application, executing on the at least one computer processor; and wherein: the document processing engine is further configured to cause the at least one computer processor to: obtain a raw document from the data repository, cause the SDF application executing on the at least one computer processor to process the raw document to obtain SDF metadata corresponding to the raw document, and store the SDF metadata in an SDF metadata structure corresponding to the raw document in the data repository.

Clause 17. The system of any of clauses 10 to 16, further comprising: a structured document format (SDF) application, executing on the at least one computer processor; and wherein: the document processing engine is further configured to cause the at least one computer processor to: obtain a raw document from the data repository, the raw document comprising a plurality of logical sections; and cause the SDF application executing on the at least one computer processor to process the raw document to obtain structured document format (SDF) metadata corresponding to the raw document, wherein the SDF metadata comprises document metadata, and a plurality of section metadata corresponding to the respective plurality of logical sections of the raw document, and wherein a section metadata comprises a section identifier.

Clause 18. The system of any of clauses 10 to 17, wherein: the document processing engine is configured to cause the at least one computer processor to: obtain an OCR content structure and an SDF metadata structure corresponding to a raw document from the data repository; match a section identifier corresponding to section metadata of a logical section from the SDF metadata structure to an artifact identifier corresponding to an artifact representation of the OCR content structure; associate, in a structured section, the logical section and the artifact representation corresponding respectively to the matched section identifier and the artifact identifier; add the structured section to the document structure corresponding to the raw document; and store the document structure in the data repository.

Clause 19. A method comprising: receiving a request for a training dataset corresponding to a raw document; obtaining, by a document processing engine, a document structure corresponding to the raw document from a data repository, the document structure comprising a plurality of structured sections; and processing, by the document processing engine, the plurality of structured sections to generate a modified document structure, wherein processing the plurality of structured sections comprises: processing, responsive to detecting that a first structured section comprises a first table, and by a general LLM, a table representation of the first table to generate a natural language table description of the first table; and inserting the natural language table description into the first structured section to obtain a first modified structured section, processing, responsive to detecting that the first structured section comprises a first image, and by an image LLM, the first image to generate a natural language image description from the first image; and inserting the natural language image description into the first structured section to obtain the first modified structured section; processing, responsive to detecting that the first structured section comprises a first form, and by the general LLM, the first form to generate a natural language form description; and inserting the natural language form description into the first structured section to obtain the first modified structured section; and outputting the modified document structure comprising the first modified structured section.

Clause 20. The method of clause 19, further comprising: generating, by the document processing engine, an augmented document from a plurality of modified structured sections in the modified document structure; tokenizing, by a document post-processing tool, the augmented document to obtain a tokenized document; generating, by the document post-processing tool, the training dataset from the tokenized document; and transmitting, by the document processing engine, the training dataset in response to the request.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
obtaining, by a document processing engine, a document structure from a data repository, the document structure comprising a plurality of structured sections; and
processing, by the document processing engine, the plurality of structured sections to generate a modified document structure, wherein processing the plurality of structured sections comprises:
processing, responsive to detecting that a first structured section comprises a first table, and by a general large language model (LLM), a table representation of the first table to generate a natural language table description of the first table,
inserting the natural language table description into the first structured section to obtain a first modified structured section,
processing, responsive to detecting that the first structured section comprises a first image, and by an image-processing LLM, the first image to generate a natural language image description from the first image, and
inserting the natural language image description into the first structured section to obtain the first modified structured section; and
outputting the modified document structure comprising the first modified structured section.

2. The method of claim 1, further comprising:
detecting that the first structured section comprises a first form, the first form comprising a plurality of key-value pairs; and
processing, responsive to detecting that the first structured section comprises the first form, and by the general LLM, the first form to generate a natural language form description; and
inserting the natural language form description into the first structured section to obtain the first modified structured section.

3. The method of claim 2, wherein the first structured section further comprises natural language sentences corresponding to the first form and wherein the natural language form description further includes the natural language sentences corresponding to the first form.

4. The method of claim 1, 2 or 3, further comprising:
generating, by the document processing engine, an augmented document from a plurality of modified structured sections in the modified document structure; and
storing the augmented document in the data repository.

5. The method of any preceding claim, further comprising:
obtaining, by the document processing engine, a raw document from the data repository, the raw document comprising a plurality of artifacts, the plurality of artifacts comprising a text section, a form, a table, and an image;
extracting, by an optical character recognition (OCR) engine, the plurality of artifacts from the raw document to obtain a plurality of artifact representations; and
storing the plurality of artifact representations in an OCR content structure corresponding to the raw document in the data repository.

6. The method of any preceding claim, further comprising:
obtaining, by the document processing engine, a raw document from the data repository, the raw document comprising a plurality of artifacts, the plurality of artifacts comprising a text section, a form, a table, and an image; and
extracting, by an optical character recognition (OCR) engine, the plurality of artifacts from the raw document to obtain a plurality of artifact representations, wherein
the artifact representation comprises an artifact identifier, content corresponding to the artifact, and
layout information corresponding to the artifact, and wherein
the layout information includes a bounding box corresponding to a relative position of the artifact in the raw document.

7. The method of any preceding claim, further comprising:
obtaining, by the document processing engine, a raw document from the data repository;
processing, by an SDF application, the raw document to obtain structured document format (SDF) metadata corresponding to the raw document; and
storing the SDF metadata in an SDF metadata structure corresponding to the raw document in the data repository.

8. The method of any preceding claim, further comprising:
obtaining, by the document processing engine, a raw document from the data repository, the raw document comprising a plurality of logical sections; and
processing, by an SDF application, the raw document to obtain structured document format (SDF) metadata corresponding to the raw document,
wherein the SDF metadata comprises document metadata, and
a plurality of section metadata corresponding to the respective plurality of logical sections of the raw document, and wherein
a section metadata comprises a section identifier.

9. The method of any preceding claim, further comprising:
obtaining an OCR content structure and an SDF metadata structure corresponding to a raw document from the data repository;
matching a section identifier corresponding to section metadata of a logical section from the SDF metadata structure to an artifact identifier corresponding to an artifact representation of the OCR content structure;
associating, in a structured section, the logical section and the artifact representation corresponding respectively to the matched section identifier and the artifact identifier;
adding the structured section to the document structure corresponding to the raw document; and
storing the document structure in the data repository.

10. The method of any of claims 1 to 9, further comprising:
receiving a request for a training dataset corresponding to a raw document, wherein the document structure corresponds to the raw document;
processing, responsive to detecting that the first structured section comprises a first form, and by the general LLM, the first form to generate a natural language form description; and
inserting the natural language form description into the first structured section to obtain the first modified structured section.

11. The method of claim 10, further comprising:
generating, by the document processing engine, an augmented document from a plurality of modified structured sections in the modified document structure;
tokenizing, by a document post-processing tool, the augmented document to obtain a tokenized document;
generating, by the document post-processing tool, the training dataset from the tokenized document; and
transmitting, by the document processing engine, the training dataset in response to the request.

12. A system comprising:
at least one computer processor;
a document processing engine, executing on the at least one computer processor, and comprising an OCR-SDF map builder and an augmented document generator;
a general large language model (general LLM), executing on the at least one computer processor;
an image-processing large language model (image LLM), executing on the at least one computer processor; and
a data repository, stored on a persistent storage device;
wherein:
the document processing engine is configured to:
obtain a document structure from the data repository, the document structure comprising a plurality of structured sections;
process the plurality of structured sections to generate a modified document structure, comprising:
processing, responsive to detecting that a first structured section comprises a first table, and by the general LLM, a table representation of the first table to generate a natural language table description of the first table, and inserting the natural language table description into the first structured section to obtain a first modified structured section,
processing, responsive to detecting that the first structured section comprises a first image, and by the image LLM, the first image to generate a natural language image description from the first image, and inserting the natural language image description into the first structured section to obtain the first modified structured section; and
output the modified document structure comprising the first modified structured section.

13. The system of claim 12, further configured to perform functionality corresponding to the steps of any of claims 2 to 11.

14. A computer readable medium comprising instruction that, when executed by programmable processing apparatus, cause the programmable processing apparatus to carry out the method of any of claims 1 to 11.
